# EUROPEAN PATENT SPECIFICATION

(11) **EP 1 518 938 B1**
(45) Date of publication and mention of the grant of the patent: **29.05.2013**
(21) Application number: 04445084.9
(22) Date of filing: 23.08.2004
(51) Int. Cl.: C22C 29/08, B22F 7/00

(54) **Cutting tool**
Schneidewerkzeug
Outil de coupe

(30) Priority: 24.09.2003 SE 0302532
(43) Date of publication of application: 30.03.2005
(73) Proprietor: Sandvik Intellectual Property AB, 811 81 Sandviken (SE)
(72) Inventor: Norgren, Susanne, 141 41 Huddinge (SE); Jansson, Bo, 711 98 Ramsberg (SE); Littecke, Peter, 141 71 Huddinge (SE)
(74) Representative: Taquist, Henrik Lennart Emanuel

(56) References cited:
- GB-A- 503 397
- GB-A- 504 522
- SE-L- 8 406 461
- US-A- 3 507 631
- MOTE J D ET AL: "INVESTIGATION OF A METHOD TO CONSOLIDATE HARD MATERIALS IN A TOUGH MATRIX" MATERIALS SCIENCE RESEARCH, SOCIETY OFF MATERIALS SCIENCE, TOKYO, JP, vol. 17, 1984, pages 695-710, XP009038493 ISSN: 1341-1683
- ERIK LASSNER AND WOLF-DIETER SCHUBERT: "Tungsten. Properties, Chemistry, Technology of the Element, Alloys, and Chemical Compounds" 1999, , USA , XP002306430 * page 139 - page 140 *

## Description

The present invention relates to a cutting tool for metal machining with excellent hot hardness, wear resistance and toughness in which the binder phase is metallic tungsten or a tungsten alloy, a method of making the same and the use thereof. It is particularly useful for the machining of work materials with high hardness such as hardened steel.

Cemented carbide is a well known cutting tool material for metal machining and includes a large number of alloys of a binder phase and a hard phase, where the binder mainly consists of cobalt and the hard phase mainly comprises WC, possibly with additions of cubic carbides such as TiC, TaC, NbC etc or mixtures thereof. The manufacture of cutting tools from cemented carbide involves pressing of specially prepared powder followed by sintering at a temperature where the cobalt melts. The properties of the sintered material can be varied widely in terms of toughness and hardness depending on the amount of cobalt and hard phase. In use, the hot hardness of the material determines which temperature it can be subjected to without being plastically deformed.

This can be a serious limitation especially in the area of metal cutting, making the use of more exclusive materials such as ceramics, CBN and diamond necessary.

In attempts to improve the hot hardness the obvious way is to substitute cobalt with a metal of high melting point. However, this creates new problems, since sintering temperatures need to be very high in order to melt the binder phase and is therefore not realistic for large scale production.

GB 504 522 discloses a method of manufacturing an alloy consisting of W or Mo with additions of Co, Si and B plus WC. Sintering is performed at a temperature below the melting point of W. A mixture according to the patent consisting of between 15 and 35 % W is subjected to a pressure of 16.5 MPa at a temperature between 1750 °C and 1900 °C for 15 minutes. It is contended that the process produces an alloy with metallic W as binder.

GB 503 397 relates to a method for producing an alloy consisting of the same type of binder, i.e. W or Mo with additions like cobalt, silica and boron, but in this case, cubic carbides TiC, MoC and TaC as hard phase. In this case the suggested pressure was 23.4 MPa and the temperature 2500 °C.

US 3,507,631 disclose a material consisting of different nitrides as hard phase using Mo, W, Rh or mixtures thereof as binder. The ratio between the thermal coefficient of expansion of the binder and the nitrides should be less than 2 and as a special case up to 50% of the nitride phase may be replaced by oxides, silicates and carbides of Ti, Nb, Zr and Ta. WC is not included as hard phase. Manufacture is by hot pressing at 1800 °C.

SE 8406461-7 describes pros and cons for different ways to manufacture alloys consisting of carbides, nitrides or oxides of Ti, Zr, Hf, V, Nb, Cr, Mo or W and a binder consisting of one or more of the elements Ti, Zr, Hf, V, Nb, Cr, Mo or W. An example of a manufacturing method involves powder pressing, pre-sintering, final sintering and isostatic pressing. The binder phase content is relatively high, at least 25 % by volume and as high as 70 % by volume. It is also stated that performance in metal cutting is about five times better than the corresponding commercially available cemented carbide grade.

Production of compacts made of tungsten carbide embedded in a binder phase of tungsten by an explosive powder compaction process is disclosed by Mote J D et al in "Investigation of a method to consolidate hard materials in a tough matrix", Materials Science Research, Society of Materials Science, Tokyo, JP, vol. 17, 1984, pages 695-710, ISSN: 1341-1683.

In an attempt to produce an alloy with 18 % WC in a binder phase of W, it was proceeded according to the invention disclosed in the above mentioned GB 504 522. It was specially found that the process conditions suggested in the patent actually produced a brittle material with low hardness. However, it was found that the process conditions suggested in the patent will actually produce an alloy where most of the W is transformed into W₂C. This is not mentioned in the patent and it is reasonable to assume that limitations in the laboratory equipment at the time of invention failed to indicate this.

Surprisingly it has been found that if the manufacturing process includes a heat treatment at about 1200 °C the toughness can be substantially improved without compromising hardness. Increasing W content over 25 % by volume will lower the hardness without increasing toughness making the suitable share of binder between 5 and 25 % by volume. The reason for specifying so high amount of binder in earlier publications could be that it was not observed that the binder actually consisted of W₂C, rather than metallic tungsten as originally intended.

It is an object of the present invention to provide a homogenous alloy without porosity where the binder is essentially made up by metallic tungsten or alloy thereof and a way of manufacturing the same.

Fig 1 shows X-ray diffraction patterns from an alloy according to prior art. Fig 2a and 2b show X-ray patterns from alloys with compositions according to the present invention before and after heat treatment. JCPDS PDF-cards used for identification are: WC Card no: 25-1047 (Bind and McCarthy Penn State University, University Park Pennsylvania, USA JCPDS Grant-in-aid report (1973)) and W card no: 04-0806 (Swanson and Tatge JC.Fel.Rep. NBS (1951)) and W₂C card no: 35-0776 (Nat.Bur.Stand.(US) Monogr. 25, 21,128 (1984))

Fig 3 shows a scanning electron microscope image in 10000X the microstructure of the prior art material and Fig 4 from the material according to the invention in which
A - WC
B - W₂C and
C - W.

Fig 5 shows the wear pattern of a reference insert and Fig 6 shows that of an insert according to the invention after a machining test.

According to the present invention there is now provided a cutting tool insert for metal machining containing tungsten carbide in a binder phase of tungsten or a tungsten alloy. The binder content of the insert is 2-25, preferably 5-20, with an average WC grain size of <5 µm. The insert may contain W₂C in residual amounts after the heat treatment disclosed below, in an amount such that in the x-ray diffraction pattern the peak ratio W₂C(101)/W(110) is <0.3, preferably <0.2, most preferably <0.15. The height of the diffraction peaks is measured from the base line without taking the background into consideration.

In one embodiment, the average WC grain size is 1-3 µm.

In a preferred embodiment, the average WC grain size is <1 µm with essentially no (that is, less than 5 %) grains >1.5 µm.

In yet another embodiment, the insert has a bimodal WC grain size distribution.

In addition to WC, the inserts may contain at least one hard constituent with a room temperature hardness of more than 1400 HV3. The amount by volume of said constituent is preferably less than 50 % by volume. Preferably said hard constituent is TiC, TaC, NbC and/or VC and/or mixed carbides thereof.

The insert can be provided with a thin wear resistant coating as known in the art, preferably 4-10 µm Ti(C,N) + 5-13 µm Al₂O₃.

The present invention also relates to a method of making a cutting tool insert for metal machining containing tungsten carbide in a binder phase of tungsten or a tungsten alloy by mixing powders of tungsten carbide and tungsten alloy by milling, sintering the mixture to blanks containing W₂C and grinding the blanks to inserts of desired shape and dimension. The consolidation of the material is enhanced by applying an external pressure during the sintering by methods known in the art. According to the invention, said blanks are subjected to a heat treatment at <1250 °C, preferably >1000 °C, in inert atmosphere or vacuum for a period of time necessary to retransform essentially all of the W₂C to W and WC. Alternatively, the heat treatment of the blanks is performed as a second step in the sintering cycle prior to the grinding of the blanks into inserts in the same or different furnace or after grinding the blanks to inserts.

The invention further relates to the use of an insert for machining of work materials with high hardness such as hardened steel.

### Example 1 (prior art)

A powder mixture of 18 weight-% W and remainder WC with an initial FSSS grain size of 0.25 µm was wet milled for 8 h in a ball mill with cemented carbide milling bodies. After drying, the powder was hot pressed at 1800 °C under vacuum (p<0.1 mbar) for 70 minutes in a graphite die into a disk of 45 mm in diameter and 5 mm in height, applying a mechanical pressure of 30 MPa.

### Example 2 (invention)

Half of the disc from Example 1 was heat treated in argon gas at 1200 °C for 8 hours.

### Example 3 (invention)

A powder mixture of 10 % W by volume and remainder WC with an initial FSSS grain size of 0.25 µm was processed according to Example 1 and heat treated according to Example 2.

### Example 4

Polished samples were prepared from bodies obtained in Examples 1,2,3 and 4 which were analysed by x-ray diffraction analysis and scanning electron microscopy.

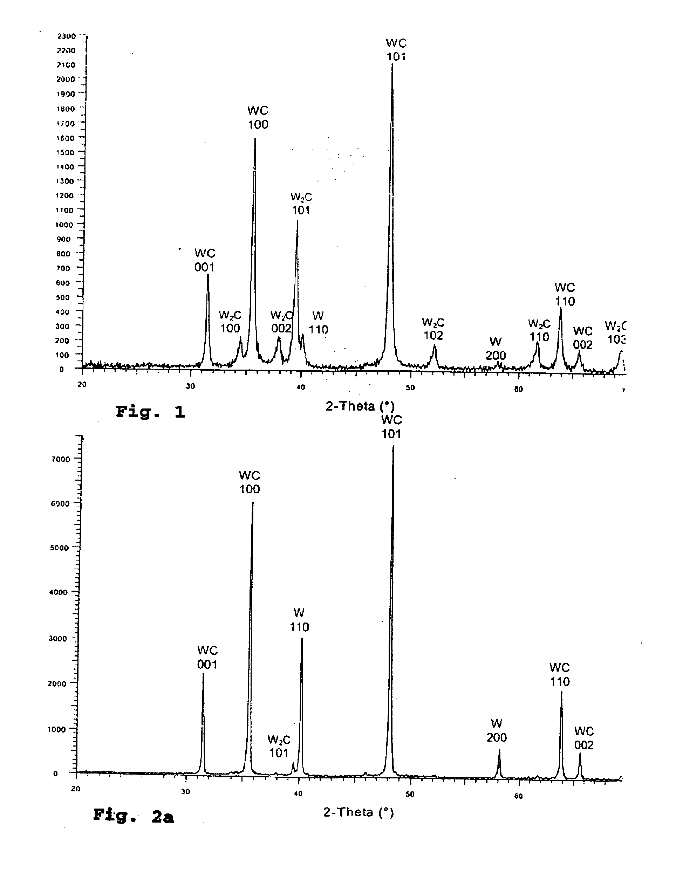

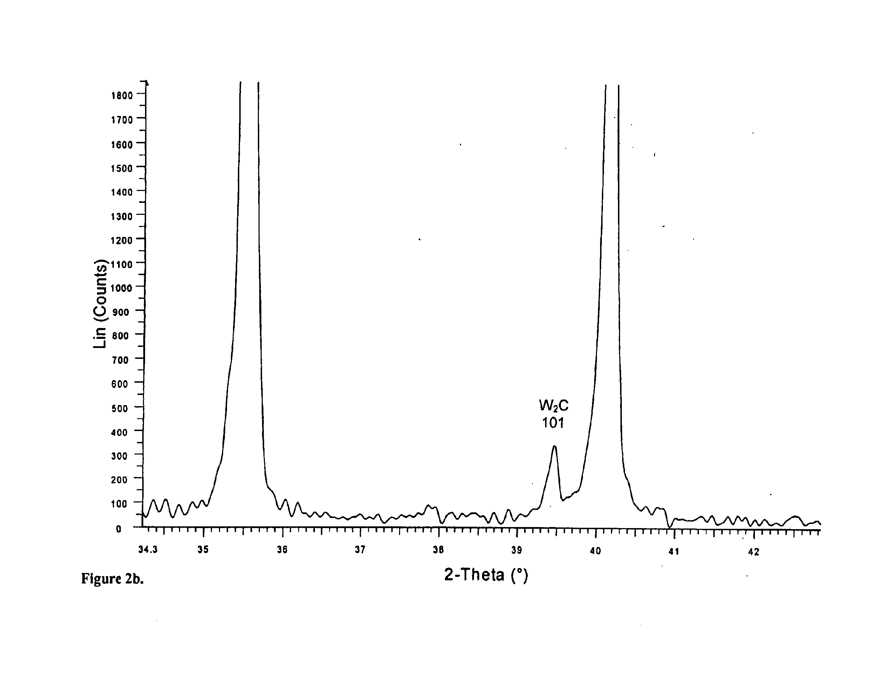

In the X-ray diffraction pattern of the sample from Example 1, peaks for W₂C, WC and some W were found, see Fig 1. However, the diffraction patterns of the samples from Example 2 and 3 showed W, WC and the X-ray peak ratio W₂C(101)/W(110) to be 0.11, as shown in Fig 2a (sample from Example 3) and enlargement of the W₂C(101)in Fig 2b (sample from Example 3).

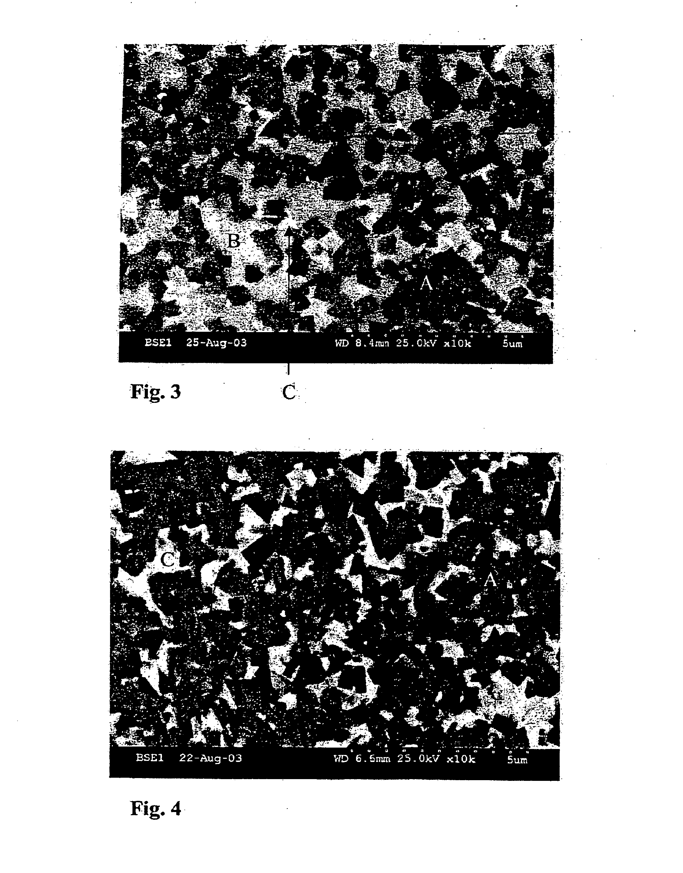

The microstructures of the sample from Example 1 and Example 2 are shown in Fig 3 and Fig 4 respectively in 10000X magnification in which
A - WC
B - W₂C and
C - W.

The WC grain size was also determined by the intercept method and it was found to be 0.5 µm for the sample from Example 1 and 0.8 µm for the sample from Example 2.

In addition hardness, HV3 at room temperature, HV1 at 900 °C and K1C (according to the indentation method) at room temperature were determined with the following results:

| Example | HV3 | HV1 at 900°C | K1C, MPam^{½} | |
|---|---|---|---|---|
| 1 | 2250 | - | 3.7 | prior art |
| 2 | 1789 | 1260 | 6.4 | invention |
| 3 | 2192 | 1450 | 5.1 | invention |

### Example 5

Example 3 was repeated to make inserts of type SNG432. The inserts were coated with a wear resistant coating consisting of about 6 µm Ti(C,N) and about 5 µm Al₂O₃.

As a reference, cemented carbide insert with a cobalt content of 6 % by weight and the same coating was used.

The inserts were subjected to a machining test in hardened ball bearing steel with a hardness > 60 HRC at a cutting speed of 180 m/min, feed 0.1 mm/rev and a depth of cut of 0.15 mm.

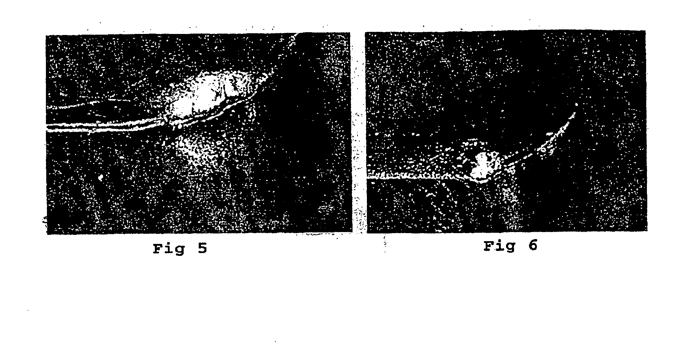

Fig 5 shows the appearance of the wear pattern of the reference after machining three components and Fig 6 shows that of the insert according to the invention after machining of twelve components.

### Example 6 invention

A powder mixture of 10 % W by volume and remainder of WC with an initial FSSS grain size of 0.25 µm and 30 vol-% (Ti,W)C or (Nb,W)C was processed according to example 1 and heat treated according to Example 2 but at a temperature of 1050 °C for (Ti,W)C and 1100 °C for (Nb,W)C for 8h such that in the X-ray diffraction patterns of the heat treated structure the W₂C(101)peak was not detectable.

## Claims

1. Cutting tool insert for metal machining comprising tungsten carbide in a binder phase of tungsten or a tungsten alloy **characterized in** a binder phase content of 2-25 vol-%, preferably 5-20 vol-% and in containing, in addition, W₂C in an amount such that in the x-ray diffraction pattern by the CuKα-line from the surface of the insert the peak ratio W₂C(101)/W(110) is <0.3, preferably <0.2.

2. Cutting tool insert according to any of the preceding claims **characterized in that** the average WC grain size is <5µm.

3. Cutting tool insert according to claim 3 **characterized in that** the average WC grain size is 1-3 µm.

4. Cutting tool insert according to claim 3 **characterized in that** the average WC grain size is <1 µm with essentially no grains >1.5 µm.

5. Cutting tool insert according to any of the preceding claims **characterized in** containing in addition to W and WC at least one hard constituent with a room temperature hardness of more than 1400 HV3, preferably TiC, TaC, NbC and/or VC and/or mixed carbides thereof.

6. Cutting tool insert according to claim 6 **characterized in that** the amount of said at least one hard constituent is less than 50 vol-%.

7. Cutting tool insert according to any of the preceding claims **characterized in that** the insert is provided with a wear resistant coating as known in the art.

8. Method of making a cutting tool insert for metal machining comprising tungsten carbide in a binder phase of tungsten or atungsten alloy by mixing of powders of tungsten carbide and optionally other hard constituents and tungsten and consolidatian the mixture at temperatures above 1500 °C to blanks containing W₂C, grinding the blanks to inserts of desired shape and dimension **characterized in that** said blanks or inserts are subjected to a heat treatment at <1250 °C, preferably > 1000 °C in inert atmosphere or vacuum for a period of time necessary to retransform essentially all of the W₂C to W and WC.

9. Use of an insert according to claims 1-8 for machining of work materials with high hardness such as hardened steel.

## Patentansprüche

1. Schneidwerkzeugeinsatz zur Metallbearbeitung mit Wolframcarbid in einer Binderphase aus Wolfram oder einer Wolframlegierung, **gekennzeichnet durch** einen Binderphasengehalt von 2-25 Vol.-%, vorzugsweise 5-20 Vol.-%, und **dadurch**, dass zusätzlich W₂C in einer Menge enthalten ist, sodass in dem Röntgenbeugungsmuster mit der CuKα-Linie von der Oberfläche des Einsatzes das Peakverhältnis W₂C(101)/W(110) < 0,3, vorzugsweise < 0,2 ist.

2. Schneidwerkzeugeinsatz nach einem der vorangehenden Ansprüche, **dadurch gekennzeichnet, dass** die durchschnittliche WC-Korngröße < 5 µm ist.

3. Schneidwerkzeugeinsatz nach Anspruch 3, **dadurch gekennzeichnet, dass** die durchschnittliche WC-Korngröße 1-3 µm ist.

4. Schneidwerkzeugeinsatz nach Anspruch 3, **dadurch gekennzeichnet, dass** die durchschnittliche WC-Korngröße < 1 µm mit im Wesentlichen keinen Körnern > 1,5 µm ist.

5. Schneidwerkzeugeinsatz nach einem der vorangehenden Ansprüche, **dadurch gekennzeichnet, dass** er zusätzlich zu W und WC zumindest eine harte Komponente mit einer Raumtemperaturhärte von mehr als 1400 HV3 enthält, vorzugsweise TiC, TaC, NbC und/oder VC und/oder gemischte Carbide davon.

6. Schneidwerkzeugeinsatz nach Anspruch 6, **dadurch gekennzeichnet, dass** die Menge der zumindest einen harten Komponente weniger als 50 Vol.-% ist.

7. Schneidwerkzeugeinsatz nach einem der vorangehenden Ansprüche, **dadurch gekennzeichnet, dass** der Einsatz mit einer aus dem Stand der Technik bekannten verschleißfesten Beschichtung versehen ist.

8. Verfahren zur Herstellung eines Schneidwerkzeugeinsatzes zur Metallbearbeitung mit Wolframcarbid in einer Binderphase aus Wolfram oder einer Wolframlegierung durch Mischen von Pulvern aus Wolframcarbid und wahlweise anderen harten Komponenten und Wolfram und Verfestigen des Gemischs bei Temperaturen über 1500° C zu Rohlingen, die W₂C enthalten, Schleifen der Rohlinge zu Einsätzen von gewünschter Form und Größe, **dadurch gekennzeichnet, dass** die Rohlinge oder Einsätze einer Wärmebehandlung bei < 1250° C, vorzugsweise > 1000° C, in einer inerten Atmosphäre oder in Vakuum eine Zeitspanne lang unterzogen werden, die notwendig ist, um im Wesentlichen das gesamte W₂C zu W und WC zurückzuwandeln.

9. Verwendung eines Einsatzes nach Ansprüchen 1 bis 8 zur Bearbeitung von Arbeitsmaterialien mit hoher Härte, wie zum Beispiel gehärtetem Stahl.

## Revendications

1. Plaquette d'outil de coupe pour l'usinage de métaux comprenant du carbure de tungstène dans une phase de liant de tungstène ou un alliage de tungstène **caractérisée par** une teneur en phase de liant de 2 à 25 % en volume, de préférence de 5 à 20 % en volume et en ce qu'elle contient, en outre, W₂C en une quantité telle que dans le profil de diffraction des rayons X par la raie CuKα depuis la surface de la plaquette, le rapport de pics W₂C(101)/W(110) soit < 0,3, de préférence < 0,2.

2. Plaquette d'outil de coupe selon l'une quelconque des revendications précédentes **caractérisé en ce que** la taille moyenne de grain de WC est < 5 µm.

3. Plaquette d'outil de coupe selon la revendication 3 **caractérisée en ce que** la taille moyenne de grain de WC est 1-3 µm.

4. Plaquette d'outil de coupe selon la revendication 3 **caractérisé en ce que** la taille moyenne de grain de WC est < 1 µm avec pratiquement aucun grain > 1,5 µm.

5. Plaquette de coupe selon l'une quelconque des revendications précédentes **caractérisée en ce qu'**elle contient, en plus de W et WC, au moins un constituant dur avec une dureté à température ambiante de plus de 1400 HV3, de préférence TiC, TaC, NbC et/ou VC et/ou des carbures mixtes de ceux-ci.

6. Plaquette d'outil de coupe selon la revendication 6 **caractérisée en ce que** la quantité dudit au moins un constituant dur est inférieure à 50 % en volume.

7. Plaquette d'outil de coupe selon l'une quelconque des revendications précédentes **caractérisé en ce que** la plaquette est pourvue d'un revêtement résistant à l'usure comme il est connu dans l'art.

8. Procédé de fabrication d'une plaquette d'outil de coupe pour l'usinage de métaux comprenant du carbure de tungstène dans une phase de liant de tungstène ou un alliage de tungstène par mélange de poudres de carbure de tungstène et facultativement d'autres constituants durs et de tungstène et consolidation du mélange à des températures supérieures à 1500 °C en ébauches contenant W₂C, meulage des ébauches en plaquettes de forme et dimension souhaitées **caractérisé en ce que** lesdites ébauches ou plaquettes sont soumises à un traitement thermique à <1250 °C, de préférence> 1000 °C dans une atmosphère inerte ou sous vide pendant une durée nécessaire pour retransformer pratiquement tout le W₂C en W et WC.

9. Utilisation d'une plaquette selon les revendications 1 à 8 pour l'usinage de matériaux de travail ayant une dureté élevée tel qu'un acier durci.
